# EUROPEAN PATENT APPLICATION

(11) **EP 4 800 446 A1**
(43) Date of publication of application: **02.09.2026**
(21) Application number: 24882556.4
(22) Date of filing: 08.05.2024
(51) Int. Cl.: G02B 5/22, B32B 27/08

(54) **BLUE LIGHT SHIELDING FILM AND ELECTRONIC DEVICE COMPRISING SAME**

(30) Priority: 26.10.2023 KR 20230145097
(71) Applicant: Toray Advanced Materials Korea Inc., Gumi-si, Gyeongsangbuk-do 39389 (KR)
(72) Inventor: KOO, Seon Woong, Gumi-si, Gyeongsangbuk-do 39389 (KR); LEE, Ji Hoon, Gumi-si, Gyeongsangbuk-do 39389 (KR); JIN, Sang Woo, Gumi-si, Gyeongsangbuk-do 39389 (KR); OH, Ji Whan, Gumi-si, Gyeongsangbuk-do 39389 (KR)
(74) Representative: Mewburn Ellis LLP
(86) International application number: PCT/KR2024/006144
(87) International publication number: WO 2025/089524

(57) **Abstract**

Disclosed are a blue light shielding film and an electronic device comprising same. The blue light shielding film comprises: a substrate; and a first light-absorbing layer and a second light-absorbing layer sequentially formed on one surface of the substrate, or a first light-absorbing layer formed on one surface of the substrate and a second light-absorbing layer formed on the opposite surface of the substrate, wherein a first resin and a second resin may have a glass transition temperature (T_{g}) of 70 °C or higher, an acid value of 12 mgKOH/g or lower, and a hydroxy value of 8 mgKOH/g or lower, and the blue light shielding film may block 40 % or more of light having a wavelength of 420 nm or shorter, may block 50 % or more of light having a wavelength of 430 nm, and may transmit 80% or more of light having a wavelength of 460 nm.

## Description

### Technical Field

The present disclosure relates to a blue light shielding film and an electronic device including the same.

### Background Art

Blue light refers to blue-colored light in a wavelength range of 380 nm to 495 nm of visible light. Blue light has the shortest wavelength among light visible to the human eye and has high energy close to that of ultraviolet light. Blue light reaches the retina without being absorbed by the cornea or lens, thereby causing not only eye fatigue but also damage to the eyes. Exposure of eyes to blue light for a long time hinders clear vision and causes the occurrence of various symptoms such as dry eye, eye fatigue, insomnia, shoulder stiffness, and back pain. Blue light included in LCDs, LEDs, lighting devices, and the like of smart devices, which are essential items for modern people, is threatening the eyesight of users.

Meanwhile, there is increasing interest in materials that block harmful blue light in order to improve the durability of OLED displays. This is because it has been verified that degradation of an OLED display is suppressed by protecting OLED elements from blue light. However, blue light-blocking materials known to date do not have a high blue light shielding rate and have short durability.

Accordingly, there is a demand for a blue light shielding film that shields blue light at a high level, exhibits high transmittance in the visible light region, and exhibits no change in light transmittance for a long time at blue light wavelengths, thereby maintaining reliability, and an electronic device including the same.

### Disclosure of Invention

### Technical Problem

Provided is a blue light shielding film shielding film shielding blue light at a high level, exhibiting high transmittance in a visible light region, and exhibiting no change in light transmittance for a long time at a blue light wavelength, thereby maintaining reliability.

Provided is an electronic device including the blue light shielding film.

### Solution to Problem

According to an aspect of the present disclosure, a blue light shielding film includes:
a substrate; and
a first light-absorbing layer, and a second light-absorbing layer sequentially formed on one surface of the substrate,
wherein the first light-absorbing layer includes a first resin and a first dye,
the second light-absorbing layer includes a second resin and a second dye, and
the first resin and the second resin have a glass transition temperature T_{g} of 70 °C or higher, an acid value of 12 mgKOH/g or lower, and a hydroxy value of 8 mgKOH/g or lower, and the blue light shielding film blocks 40 % or more of light having a wavelength of 420 nm or shorter, blocks 50 % or more of light having a wavelength of 430 nm, and transmits 80 % or more of light having a wavelength of 460 nm.

The substrate may be a barrier film.

A thickness of the substrate may be 60 µm to 250 µm.

The first resin and the second resin may be each independently a resin selected from a polyester-based resin, an acrylic-based resin, an acrylic urethane-based resin, a polyester acrylate-based resin, a polyurethane acrylate-based resin, an epoxy acrylate-based resin, a urethane-based resin, an epoxy-based resin, a polycarbonate-based resin, a cellulose-based resin, an acetal-based resin, a polyethylene-based resin, a polystyrene-based resin, a polyamide-based resin, a polyimide-based resin, a melamine-based resin, a phenolic-based resin, a silicone-based resin, and a combination thereof.

The first dye may have a main absorption wavelength range of 350 nm to 420 nm.

The first dye may include a dye selected from a coumarin-based dye, a hydroxyl benzotriazole (HB)-based dye, a tris-resorcinol-triazine chromophore (TRTC)-based dye, a hydroxylphenyl-benzotriazole chromophore (HBC)-based dye, an indole-based dye, a pyridine-based dye, or a combination thereof.

The second dye may have a main absorption wavelength range of 350 nm to 420 nm, a main absorption wavelength range of 410 nm to 440 nm, and a main absorption wavelength range of any combination thereof.

The second dye may include a dye selected from a porphyrin-based dye, a rhodamine (RH)-based dye, a squaraine (SQ)-based dye, a cyanine (CY)-based dye, or any combination thereof.

A content of the first dye may be 1 mass% to 40 mass% based on a total mass of the first resin.

A content of the second dye may be 0.001 mass% to 5 mass% based on a total mass of the second resin.

The second light-absorbing layer may have a maximum emission peak at a wavelength between 400 nm and 500 nm, and a full width at half maximum of the emission peak may be 20 nm or less under monomodal light irradiation.

Each of the first light-absorbing layer and the second light-absorbing layer may further include at least one selected from a UV blocking agent, a UV stabilizer, an antioxidant, and inorganic particles.

A content of the UV stabilizer may be 1 mass% to 10 mass% based on a total mass of the first resin or the second resin.

A thickness of each of the first light-absorbing layer and the second light-absorbing layer may be 5 µm to 15 µm.

A light transmittance change rate at a wavelength of 430 nm may satisfy Expression 1 below. $0.01 \leq \left(T-{T}_{0}\right) / {T}_{0} \leq 0.25$ wherein
T₀ is a light transmittance (%) before irradiation of light having a wavelength of 430 nm, and
T is a light transmittance (%) after irradiation of light having a wavelength of 430 nm for 500 hours.

According to another aspect of the present disclosure, a blue light shielding film includes:
a substrate;
a first light-absorbing layer formed on one surface of the substrate; and
a second light-absorbing layer formed on the opposite surface of the substrate,
wherein the first light-absorbing layer includes a first resin and a first dye,
the second light-absorbing layer includes a second resin and a second dye,
the first resin and the second resin have a glass transition temperature T_{g} of 70 °C or higher, an acid value of 12 mgKOH/g or lower, and a hydroxy value of 8 mgKOH/g or lower, and the blue light shielding film blocks
40 % or more of light having a wavelength of 420 nm or shorter, blocks 50% or more of light having a wavelength of 430 nm, and transmits 80 % or more of light having a wavelength of 460 nm.

According to another aspect of the present disclosure, an electronic device includes the above-described blue light shielding film.

### Advantageous Effects of Invention

The blue light shielding film according to an aspect includes a first light-absorbing layer including a first resin and a first dye, and a second light-absorbing layer including a second resin and a second dye. The blue light shielding film may shield blue light at a high level, exhibit high transmittance in a visible light region, and exhibit no change in light transmittance for a long time at a blue light wavelength, thereby maintaining reliability **Brief Description of Drawings**
FIG. 1 is a cross-sectional view of a blue light shielding film according to an embodiment.
FIG. 2 is a cross-sectional view of a blue light shielding film according to another embodiment.
FIGS. 3 to 5 are transmittance spectra of blue light shielding films according to Examples 1 to 3 in the wavelength range of 400 nm to 500 nm, respectively.
FIGS. 6 to 13 are transmittance spectra of blue light shielding films according to Comparative Examples 1 to 8 in the wavelength range of 400 nm to 500 nm, respectively.

### Mode for the Invention

Hereinafter, a blue light shielding film and an electronic device including the same willl be described in detail with reference to embodiments of the present disclosure and the accompanying drawings. These embodiments are only provided by way of example to illustrate the present disclosure in more detail, and it will be apparent to those skilled in the art that the scope of the present disclosure is not limited by these embodiments.

Unless otherwise defined, all technical and scientific terms used herein have the same meaning as commonly understood by one or ordinary skill in the art to which this application belongs. However, in the event of any conflict or inconsistency between terms used herein and terms of the cited references, the terms used in this specification take precedence over the terms of the cited references. In addition, although methods and materials similar or equivalent to those described in the specification may be used in embodiments or experiments of the present disclosure, appropriate methods and materials are described in the specification.

Throughout the specification, the term "include" in relation to an element does not preclude other elements but may further include another element, unless otherwise stated.

As used herein, the term "and/or" includes any and all combinations of one or more of the associated listed items.

As used herein, the term "combination" refers to including a mixture, an alloy, or a composite of the above-described components.

The term "or" refers to "and/or" unless otherwise stated. Expressions such as "at least one of" or " one or more", when preceding a list of elements, modify the entire list of elements and do not modify the individual elements of the list.

Throughout the specification, terms "first", "second", and the like are used to distinguish one component from another, without indicating order, quantity, or importance. An expression used in the singular encompasses the expression of the plural, unless otherwise indicated or it has a clearly different meaning in the context.

As used herein, the terms "an embodiment", "embodiments", and the like indicate that elements described with regard to an embodiment are included in at least one embodiment described in this specification and may or may not present in other embodiments. In addition, it may be understood that the described elements are combined in any suitable manner in various embodiments.

Unless otherwise stated, all percentages, parts, ratios, and the like are based on weight. When an amount, concentration, other value, or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. The scope of the present disclosure is intended not to be limited by a specific value mentioned when a range is defined.

Unless otherwise stated, the unit "parts by weight" and "wt %" refer to a weight ratio of each component and the unit "parts by mass" and "mass %" refer to a converted solid content of a weight ratio of each component.

"About" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations or within ± 30 %, 20 %, 10 %, or 5 % of the stated value.

Unless otherwise defined, all terms (including technical and scientific terms) used herein have the same meaning as commonly understood by one of ordinary skill in the art to which this disclosure belongs. Also, it will be further understood that terms, such as those defined in commonly used dictionaries, should be interpreted as having a meaning that is consistent with their meaning in the context of the relevant art and will not be interpreted in an idealized. Or, the terms should not be interpreted in an excessively formal sense.

The blue light shielding film is a film that blocks harmful blue light. A plurality of methods for manufacturing such a blue light shielding film are known in the art. The methods include absorption, reflection, interference technologies, or a combination of these technologies. For example, the blue light shielding film includes an organic or inorganic compound that absorbs and/or reflects and/or interferes with a wavelength of blue light. For example, the blue light shielding film may be formed of multiple layers of inorganic compound layers alternately having a low refractive index and a high refractive index, such as SiO₂ and TiO₂. However, such a blue light shielding film does not have a high blue light shielding rate and has short durability.

Based thereon, the inventors of the present disclosure suggest a blue light shielding film and an electronic device including the same as described below.

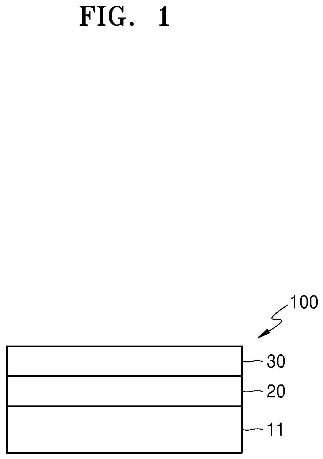

FIG. 1 is a cross-sectional view of a blue light shielding film according to an embodiment.

Referring to FIG. 1, a blue light shielding film 100 according to an embodiment represents a film in which a substrate 11, a first light-absorbing layer 20, and a second light-absorbing layer 30 are sequentially disposed.

The blue light shielding film 100 according to an embodiment may shield blue light at a high level, exhibit high transmittance in a visible light region, and exhibit no change in light transmittance for a long time at a blue light wavelength, thereby maintaining reliability.

The substrate 11 may be a film or a sheet. For example, the substrate 11 may be a film. For example, the substrate 11 may be a barrier film. The substrate 11 may have a water vapor transmission rate (WVTR) of 10 g/m²·day or less, 9 g/m²·day or less, 8 g/m²·day or less, 7 g/m²·day or less, or 6 g/m²·day or less under conditions of 37.8 °C and 100 % RH.

The substrate 11 may be a transparent thermoplastic plastic. The substrate 11 may have high adhesion with a resin, and transmittance of light incident from the rear surface may be 90% or more. Because the substrate 11 may have uniform surface smoothness, a deviation in luminance may be small.

For example, the substrate 11 may be polyethyleneterephthalate (PET), cellulose triacetate (TAC), polycarbonate (PC), polyether sulfone (PES), polyacrylate (PAR), polyetherimide (PEI), polyethylenenaphthalate (PEN), polyphenylene sulfide (PPS), polyallylate, polyimide, cellulose acetate propionate (CAP), a mixture thereof, or a copolymer thereof. For example, polyethyleneterephthalate (PET), cellulose triacetate (TAC), or polycarbonate (PC) may be used for the substrate 11. The substrate 11 may be processed into a film form by uniaxial stretching and/or biaxial stretching in a machine direction (MD) and/or a transverse direction (TD).

The thickness of the substrate 11 may be 60 µm to 250 µm. For example, the thickness of the substrate 11 may be 60 µm to 125 µm. In addition, the substrate 11 may be formed by bonding two or more films by a known method within the above thickness range. When the thickness of the substrate 11 is within the above range, excellent light transmittance and a low water vapor transmission rate (WVTR) may be obtained at a visible light wavelength.

A primer layer may be disposed on at least one surface of the substrate 11. The primer layer is not only a planarization layer but also serves to increase interfacial adhesion with the first light-absorbing layer 20.

The primer layer may be a cured layer of a primer layer-forming composition including a polyurethane-based resin and/or a polyester-based resin, a curing agent, a UV absorber, and a radical scavenger.

As a binder resin, a polyurethane-based resin and/or a polyester-based resin may be used. For example, the binder resin may include a resin in a form in which a polyester-based resin and a polyurethane-based resin, both water-dispersible and including at least one functional group selected from a hydroxyl group, a carboxyl group, and a N-methylol group, are mixed. The polyurethane-based resin and the polyester-based resin may be soluble or dispersible in water. The polyurethane-based resin may be obtained by substitution polymerization or copolymerization of an acrylic polymer of a di-ol.

The curing agent may include at least one curing agent selected from an oxazoline-based, a carbodiimide-based, an epoxy-based, and a melamine-based curing agent. By such a curing agent, room-temperature adhesion and moisture-resistant adhesion may be imparted to the primer layer. The carbodiimide-based curing agent or the oxazoline-based curing agent may serve to prevent blocking by suppressing moisture permeating into the substrate film.

The UV absorber may be a benzotriazole-based compound, and the benzotriazole-based UV absorber may be, for example, 2-[2'-hydroxy-5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-tert-butyl-5'-(methacryloyloxyethyl)phenyl]-2H-benzotriazole, 2-[2'-hydroxy-5'-tert-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-tert-butyl-2H-benzotriazole, or 2-[2'-hydroxy-5'-(methacryloyloxyethyl)phenyl]-5-nitro-2H-benzotriazole.

The radical scavenger may be a compound including an amine structure, and for example, may be commonly referred to as a hindered amine light stabilizer (HALS).

The primer layer may be formed by applying a primer layer-forming composition onto at least one surface of the substrate 11. For example, the primer layer-forming composition may include 40 to 60 parts by weight of the polyester-based resin, 25 to 40 parts by weight of the curing agent, and 15 to 40 parts by weight of the UV absorber and the radical scavenger, based on 100 parts by weight of the polyurethane-based resin.

The primer layer-forming composition may increase UV resistance by mixing the polyester-based resin, which has low decomposition by ultraviolet (UV) light, to prevent decomposition of urethane by UV light. In the case where the polyester-based resin is included less than 40 parts by weight based on 100 parts by weight of the polyurethane-based resin, there is a problem of insufficient UV resistance of the primer layer. In the case where the content exceeds 60 parts by weight, there is a problem in that easy-adhesion to a post-processing resin, which is the greatest advantage of the polyurethane-based resin, is deteriorated.

In the case where the curing agent is included less than 25 parts by weight based on 100 parts by weight of the polyurethane-based resin, the curing reaction is insufficient, leading to a problem in which the primer layer is also transferred to the opposite surface even after drying. In the case where the content exceeds 40 parts by weight, an excessive amount of the curing agent may deteriorate stability of a prepared solution, which may cause an aggregation problem.

In the case where the UV absorber and the radical scavenger are included less than 15 parts by weight based on 100 parts by weight of the polyurethane-based resin, UV resistance effect is negligible. In the case where the content exceeds 40 parts by weight, there is a problem in that coatability and transparency, required physical properties for an optical substrate film, may deteriorate. The UV absorber and the radical scavenger may be mixed in a weight ratio of 3.5:1 to 8:1. In the case where the weight ratio of the UV absorber to the radical scavenger is less than 3.5:1, adhesion after UV irradiation becomes insufficient. In the case where the weight ratio exceeds 8:1, turbidity of the prepared solution increases by 0.2 or more, resulting in deterioration of high transparency of the substrate film. The UV absorber may be used in a liquid form, and the UV absorber may be included in a ratio of 0.1 wt% to 5 wt%, or for example, 1 wt% to 3 wt%, based on a total solid content of the primer layer-forming composition. In addition, the radical scavenger may also be used in a liquid form, and the radical scavenger may be included in a ratio of 0.1 wt% to 8 wt%, or for example, 3 wt% to 5 wt%, based on the total solid content of the primer layer-forming composition. A mixture of the UV absorber and the radical scavenger resin may be included in a ratio of 0.1 wt% to 10 wt% based on the total solid content of the primer layer-forming composition. In the case where the content of the mixture of the UV absorber and the radical scavenger resin is less than 0.1 wt%, a UV resistance effect is difficult to obtain. In the case where the content exceeds 10 wt%, coatability and transparency, required physical properties for an optical substrate film, may deteriorate.

The primer layer-forming composition may further include an anionic or non-ionic surfactant. The surfactant is used in a water-soluble coating solution, and a known anionic or non-ionic surfactant may be applied to the substrate film by a required amount in order to increase wettability of the substrate film and uniformly apply the coating solution. In addition, an additive may further be used in the primer layer-forming composition to improve coatability and functionality, and organic particles, inorganic particles, or a defoamer may be used as such an additive. In addition, the primer layer-forming composition may include inorganic particles having a relatively small refractive index difference from the binder resin to ensure runnability. At this time, an average particle diameter of the inorganic particles may be 30 nm to 500 nm, or for example, 50 nm to 300 nm. In the case where the average particle diameter of the inorganic particles is less than 30 nm, fine particles may not assist runnability and scratch resistance on the substrate and also an effect of introducing fine particles may not be obtained. In the case where the average particle diameter of the inorganic particles exceeds 500 nm, a problem affecting haze occurs. A centerline average roughness (Ra) of the primer layer may be 10 nm or less.

The thickness of the primer layer may be 0.01 µm to 3 µm, or for example, 0.05 µm to 1 µm, 1 nm to 800 nm, 10 nm to 600 nm, 100 nm to 500 nm, or 100 nm to 300 nm. In the case where the thickness of the primer layer is less than 0.01 µm, transparency may be improved, but adhesion during post-processing may decrease. In the case where the thickness is greater than 3 µm, adhesion characteristics are improved, but transparency and coatability may deteriorate.

The first light-absorbing layer 20 and the second light-absorbing layer 30 are sequentially included on one surface of the substrate 11. The blue light shielding film 100 in which two or more light-absorbing layers are stacked in this manner may prevent deterioration of organic materials compared to a blue light shielding film composed of a single light-absorbing layer.

In general, a liquid crystal display (LCD) is a non-emissive display device that cannot emit light directly, but instead use external incident light to form an image. Such a liquid crystal display requires a back light unit (BLU) that emits light to the rear surface thereof.

However, an organic fluorescent material display emits light or exhibits functionality by absorbing light irradiated from a blue LED.

An organic fluorescent material may realize a high color reproduction rate and excellent luminance characteristics without including inorganic particles such as cadmium-based nanoparticles. The organic fluorescent material has superior luminous efficiency compared to inorganic nanoparticles applied to quantum dot technology and may realize various emission characteristics even with the same fluorescent material through changes in surrounding chemicals. Because the organic fluorescent material is relatively resistant to moisture, various substrates may be used without applying a barrier film, and combination with other optical films is easy. However, the organic fluorescent material may undergo deterioration by short-wavelength blue light, resulting in reduction in light durability of the display.

Therefore, because the blue light shielding film 100 according to an embodiment includes two light-absorbing layers, the second light-absorbing layer 30 may shield blue light region having short-wavelength among wavelength regions of light emitted from the backlight unit (BLU), so that reliability of the dye of the first light-absorbing layer 20 may be obtained, and simultaneously the short-wavelength blue light which is harmful regions causing retinal degradation and vision deterioration.

In addition, the blue light shielding film 100 in which the second light-absorbing layer 30 is disposed on the first light-absorbing layer 20 may have improved light stability simultaneously with shielding of short-wavelength blue light, compared to a blue light shielding film in which the first light-absorbing layer 20 is disposed on the second light-absorbing layer 30. Organic dyes may deteriorate by light or heat, and dyes commonly used in the art deteriorate by light. By shielding short-wavelength blue light that may cause deterioration, reliability of the dye may be improved. Such an effect is obtained because the second light-absorbing layer 30 shields short-wavelength blue light among light emitted from the BLU.

In comparison, in the case where the first light-absorbing layer 20 directly faces the light emitted from the BLU, the dye is deteriorated by the short-wavelength blue light, so that transmittance significantly decreases significantly affecting optical characteristics of an electronic device. Due to high energy of short-wavelength blue light, the blue light may affect the dye unless the blue light is not blocked.

The first light-absorbing layer 20 includes a first resin and a first dye. The second light-absorbing layer 30 includes a second resin and a second dye.

The first resin and the second resin may be a thermosetting resin, a thermoplastic resin, a mixture thereof, or a copolymer thereof. A glass transition temperature (T_{g}) of the first resin and the second resin may be 70 °C or higher. In the case where the glass transition temperature (T_{g}) of the first resin and the second resin is lower than 70 °C, aggregation may occur between a plurality of organic dyes over time under an environment of high temperature or high temperature and high humidity, resulting in deterioration of optical characteristics. In the case where the glass transition temperature (T_{g}) of the first resin and the second resin exceeds 150 °C, high crystallinity of the resin may cause low solubility in a solvent, so that the resin may be crystallized while drying after coating the resin on the substrate 11 and a film curl may occur.

The first resin and the second resin may have an acid value of 12 mgKOH/g or lower and a hydroxy value may be 8 mgKOH/g or lower. For example, the acid value of the first resin and the second resin may be more than 0 mgKOH/g but not more than 12 mgKOH/g or less, and the hydroxy value thereof may be more than 0 mgKOH/g but not more than 8 mgKOH/g or less.

The first resin and the second resin may be each independently a resin selected from a polyester-based resin, an acrylic-based resin, an acrylic urethane-based resin, a polyester acrylate-based resin, a polyurethane acrylate-based resin, an epoxy acrylate-based resin, a urethane-based resin, an epoxy-based resin, a polycarbonate-based resin, a cellulose-based resin, an acetal-based resin, a polyethylene-based resin, a polystyrene-based resin, a polyamide-based resin, a polyimide-based resin, a melamine-based resin, a phenol-based resin, a silicone-based resin, and a combination thereof.

Examples of the first resin may be a polyester-based resin, a polyester acrylate-based resin, or a copolymer of a combination thereof. Examples of the second resin may be an acrylic-based resin, an acrylic urethane-based resin, a polyurethane acrylate-based resin, an epoxy acrylate-based resin, a urethane-based resin, a silicone-based resin, a polyethylene-based resin, a polyimide-based resin, a melamine-based resin, a phenol-based resin, or a copolymer of a combination thereof.

The first dye may have a main absorption wavelength range of 350 nm to 420 nm.

Examples of the first dye may include a dye selected from a coumarin-based dye, a hydroxyl benzotriazole (HB)-based dye, a tris-resorcinol-triazine chromophore (TRTC)-based dye, a hydroxylphenyl-benzotriazole chromophore (HBC)-based dye, an indole-based dye, a pyridine-based dye, or a combination thereof. For example, the first dye may be a coumarin-based dye.

A content of the first dye may be 1 mass% to 40 mass% based on a total mass of the first resin. For example, the content of the first dye may be 1 mass% to 30 mass% or 1 mass% to 20 mass% based on the total mass of the first resin. In the case where the content of the first dye is less than 1 mass%, it is difficult to sufficiently shield a short-wavelength blue light region. In the case where the content of the first dye exceeds 40 mass%, the dye may aggregate to form fine particles causing internal scattering leading to a loss of transparency.

The second dye may have a main absorption wavelength range of 350 nm to 420 nm, a main absorption wavelength range of 410 nm to 440 nm, and a main absorption wavelength range of any combination thereof.

Examples of the second dye may include a dye selected from a porphyrin-based dye, a rhodamine (RH)-based dye, a squaraine (SQ)-based dye, a cyanine (CY)-based dye, or any combination thereof. For example, the second dye may be a porphyrin-based dye.

A content of the second dye may be 0.001 mass% to 5 mass% based on a total mass of the second resin. For example, the content of the second dye may be 0.001 mass% to 4 mass%, 0.001 mass% to 3 mass%, 0.001 mass% to 2 mass%, or 0.001 mass% to 1 mass% based on the total mass of the second resin. In the case where the content of the second dye is less than 0.001 mass%, it is difficult to sufficiently shield the short-wavelength blue light region. In the case where the content exceeds 5 mass%, brightness of a display decreases and it is difficult to adjust a color gamut as the whole blue light region is absorbed as well as the short-wavelength blue light region.

The second light-absorbing layer 30 may have a maximum emission peak at a wavelength of 400 to 500 nm, and a full width at half maximum of the emission peak may be 20 nm or less under monomodal light irradiation. In the case where the full width at half maximum of the second light-absorbing layer 30 exceeds 20 nm, light in a region of 440 nm or more as well as the short-wavelength blue light region is significantly absorbed, affecting brightness (nit, luminance) of the display.

Each of the first light-absorbing layer 20 and the second light-absorbing layer 30 may further include at least one of a UV blocking agent, a UV stabilizer, an antioxidant, and inorganic particles.

The UV blocking agent serves to absorb or shield light having a wavelength of 420 nm or less. As an example of the UV blocking agent, tris-resorcinol-triazine chromophore (TRTC), hydroxybenzotriazole (HOBT), or hydroxylphenyl-benzotriazole chromophore (HBC) may be used alone or in combination of two or more. A content of the UV blocking agent may be 0.1 mass% to 10 mass% based on the total mass of the first resin or the second resin.

The antioxidant serves to improve weather resistance. As an example of the antioxidant, 4-hydroxy-2,2,6,6-tetramethylpiperidin-1-oxyl may be used. A content of the antioxidant may be 0.01 mass% to 10 mass% based on the total mass of the first resin or the second resin.

The UV stabilizer serves to improve weather resistance. As an example of the UV stabilizer, a hindered amine-based UV stabilizer may be used. A content of the UV stabilizer may be 0.01 mass% to 10 mass%, 0.01 mass% to 8 mass%, or 0.01 mass% to 5 mass% based on the total mass of the first resin or the second resin.

The inorganic particles may be particles having a particle diameter of 10 nm to 10 µm. The inorganic particles may be in a hollow form. As examples of the inorganic particles, SiO₂, TiO₂, ZrO₂, Al₂O₃, or a combination thereof may be used, but is not limited thereto, and inorganic particles available in the art may be used. A content of the inorganic particles may be 0.01 mass% to 5 mass% based on the total mass of the first resin or the second resin.

Each of a thickness of the first light-absorbing layer 20 and the second light-absorbing layer 30 may be 5 µm to 15 µm or 5 µm to 10 µm. In the case where the thicknesses of the first light-absorbing layer 20 and the second light-absorbing layer 30 are less than 5 µm, thickness uniformity may decrease and a light absorption rate may vary depending on a position. In the case where the thicknesses of the first light-absorbing layer 20 and the second light-absorbing layer 30 exceed 15 µm, the resin shrinks further due to a difference in thermal expansion coefficient between the substrate 11 and the resin, and a film curl may occur.

The blue light shielding film 100 may satisfy the following Expression 1 in terms of a light transmittance change rate at a wavelength of 430 nm. $0.01 \leq \left(T-{T}_{0}\right) / {T}_{0} \leq 0.25$

In Expression 1,
T₀ is a light transmittance (%) before irradiation of light having a wavelength of 430 nm, and
T is a light transmittance (%) after irradiation of light having a wavelength of 430 nm for 500 hours.

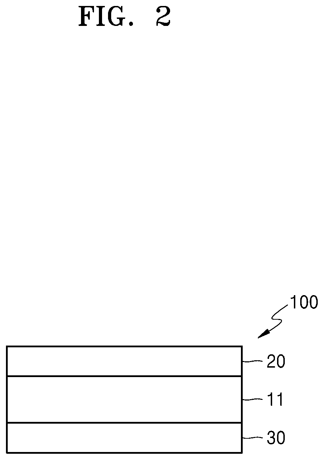

FIG. 2 is a cross-sectional view of a blue light shielding film according to another embodiment.

Referring to FIG. 2, a blue light shielding film 100' according to another embodiment shows a film in which a first light-absorbing layer 20 is disposed on one surface of a substrate 11, and a second light-absorbing layer 30 is disposed on the opposite surface of the substrate 11.

The blue light shielding film 100' according to another embodiment may shield blue light at a high level, exhibit high transmittance in a visible light region, and exhibit no change in light transmittance for a long time at a blue light wavelength, thereby maintaining reliability.

Specific details of the substrate 11, the first light-absorbing layer 20, the second light-absorbing layer 30, and the blue light shielding film 100' are the same as those described above, and thus description thereof will be omitted below.

An electronic device according to another embodiment may include the blue light shielding film described above. Examples of the electronic device include a display device of an organic light emitting diode (OLED), a semiconductor device, a solar cell, a liquid crystal display, or an organic electroluminescent display.

Hereinafter, the configuration of the present disclosure and effects thereof will be described in more detail through examples and comparative examples. However, these examples are for describing the present disclosure more specifically, and the scope of the present disclosure is not limited to these examples.

### [Examples]

### Example 1: Blue Light Shielding Film

As a substrate, a polyethylene terephthalate substrate film having a thickness of about 100 µm (TAK, XG7PH8) was prepared.

Separately, a first light-absorbing layer-forming composition was prepared by dissolving and mixing 100 mass% of a polyester-based resin (acid value: < 4 mgKOH/g, hydroxy value: 5 mgKOH/g, T_{g}: 84 °C, GK880, and manufactured by Vylon) as a first resin and 20 mass% of a 7-diethylamino-4-methylcoumarin (manufactured by Sigma-Aldrich) dye as a first dye in an ethyl acetate solvent. The first light-absorbing layer-forming composition was applied onto an upper surface of the primer layer by bar coating and dried at 170 °C for 3 minutes to form a first light-absorbing layer having a thickness of 10 µm.
a second light-absorbing layer-forming composition was prepared by dissolving and mixing 100 mass% of an acrylic resin (acid value: 12 mgKOH/g, hydroxy value: 5 mgKOH/g, T_{g}: 70 °C, ACS-618, and manufactured by Arakawa) as a second resin and 0.01 mass% of a porphyrin-based dye (FDB-002 and manufactured by Yamada Chem) as a second dye, in a methyl ethyl ketone solvent. The second light-absorbing layer-forming composition was applied onto an upper surface of the first light-absorbing layer by bar coating and dried at 170 °C for 3 minutes to form a second light-absorbing layer having a thickness of 10 µm, thereby manufacturing the blue light shielding film as shown in FIG. 1.

### Example 2: Blue Light Shielding Film

A blue light shielding film was manufactured in the same manner as in Example 1, except that 5 mass% of a 2-(2-hydroxyphenyl)-benzotriazole derivative (Tinuvin 970 and manufactured by BASF) was added to the second light-absorbing layer-forming composition and used as a UV stabilizer.

### Example 3: Blue Light Shielding Film

A blue light shielding film was manufactured in the same manner as in Example 1, except that the second light-absorbing layer-forming composition was applied onto the opposite surface of the substrate by bar coating to manufacture the blue light shielding film as shown in FIG. 2.

### Comparative Example 1: Blue Light Shielding Film

A blue light shielding film was manufactured in the same manner as in Example 1, except that the second light-absorbing layer was not formed on the upper surface of the first light-absorbing layer.

### Comparative Example 2: Blue Light Shielding Film

A blue light shielding film was manufactured in the same manner as in Example 1, except that the second light-absorbing layer-forming composition was applied onto the upper surface of the primer layer by bar coating and dried at 170 °C for 3 minutes to form a second light-absorbing layer having a thickness of 10 µm.

### Comparative Example 3: Blue Light Shielding Film

A blue light shielding film was manufactured in the same manner as in Example 3, except that the second light-absorbing layer-forming composition was applied onto the upper surface of the primer layer by bar coating and dried at 170 °C for 3 minutes to form a second light-absorbing layer having a thickness of 10 µm, and the first light-absorbing layer-forming composition was applied onto the opposite surface of the substrate by bar coating and dried at 170 °C for 3 minutes to form a first light-absorbing layer having a thickness of 10 µm.

### Comparative Example 4: Blue Light Shielding Film

A mixture of a first light-absorbing layer-forming composition and a second light-absorbing layer-forming composition was prepared by dissolving and mixing the first light-absorbing layer-forming composition and the second light-absorbing layer-forming composition in a methyl ethyl ketone solvent, the second light-absorbing layer-forming composition further including 5 mass% of a 2-(2-hydroxyphenyl)-benzotriazole derivative (Tinuvin 970 and manufactured by BASF) was added as a UV stabilizer. A blue light shielding film was manufactured in the same manner as in Example 1, except that the mixture was applied onto the upper surface of the primer layer by bar coating and dried at 170 °C for 3 minutes to form a first light-absorbing layer having a thickness of 10 µm, and a second light-absorbing layer was not separately formed.

### Comparative Example 5: Blue Light Shielding Film

A blue light shielding film was manufactured in the same manner as in Example 1, except that a first light-absorbing layer-forming composition using 100 mass% of an acrylic resin (acid value: 12 mgKOH/g, hydroxy value: 5 mgKOH/g, T_{g}: 70 °C, ACS-618, and manufactured by Arakawa) as a second resin, and 100 mass% of a polyester-based resin (acid value: < 4 mgKOH/g, hydroxy value: 5 mgKOH/g, T_{g}: 84 °C, GK880, and manufactured by Vylon) was used as a first resin.

### Comparative Example 6: Blue Light Shielding Film

A blue light shielding film was manufactured in the same manner as in Example 1, except that a polyethylene phthalate substrate film (TAK, XD500P) having a thickness of about 50 µm was used as the substrate.

### Comparative Example 7: Blue Light Shielding Film

A blue light shielding film was manufactured in the same manner as in Example 1, except that a first light-absorbing layer was formed using a first light-absorbing layer-forming composition including 100 mass% of a polyester-based resin (acid value: < 2 mgKOH/g, hydroxy value: 9 mgKOH/g, T_{g}: 60 °C, GK240, and manufactured by Vylon) as a third resin, and a second light-absorbing layer was not formed on the upper surface of the first light-absorbing layer.

### Comparative Example 8: Blue Light Shielding Film

A blue light shielding film was manufactured in the same manner as in Example 1, except that a first light-absorbing layer-forming composition, prepared by dissolving and mixing 100 mass% of an acrylic resin (acid value: 12 mgKOH/g, hydroxy value: 5 mgKOH/g, T_{g}: 70 °C, ACS-618, and manufactured by Arakawa) as a second resin and 20 mass% of a 7-diethylamino-4-methylcoumarin (manufactured by Sigma-Aldrich) dye as a first dye in an ethyl acetate solvent, was used.

Main components and physical properties of the first resin, the second resin, and the third resin used in the blue light shielding films manufactured by Examples 1 to 3 and Comparative Examples 1 to 8 are summarized and shown in Table 1 below.

**[Table 1]**

| | First resin | Second resin | Third resin |
|---|---|---|---|
| Main resin | polyester | acryl | polyester |
| Acid value (mgKOH/g) | <4 | 12 | <2 |
| Hydroxy value (mgKOH/g) | 5 | 5 | 9 |
| T_{g} (70 °C) | 84 | 70 | 60 |

### Evaluation Example 1: Evaluation of Physical Properties

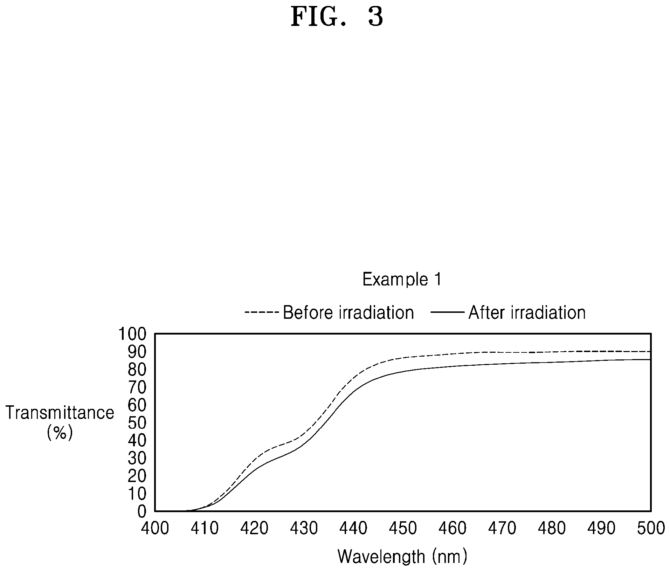

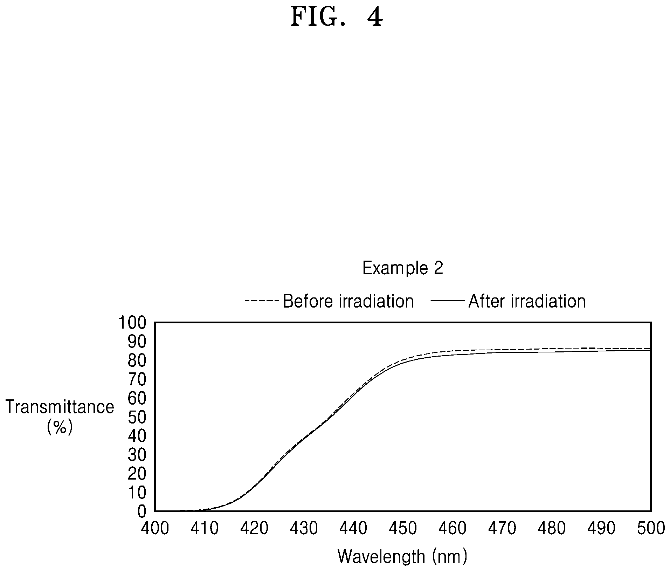

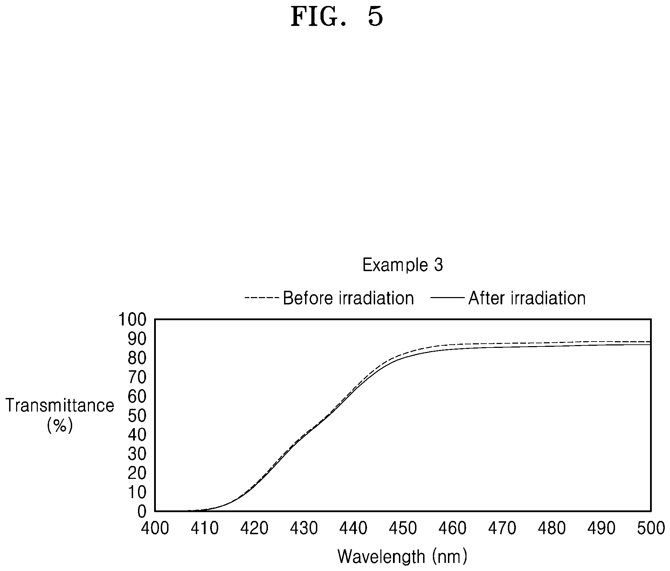

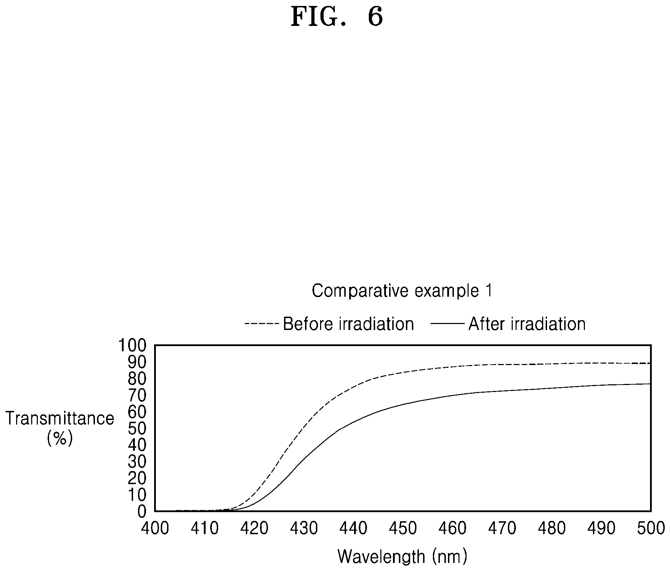

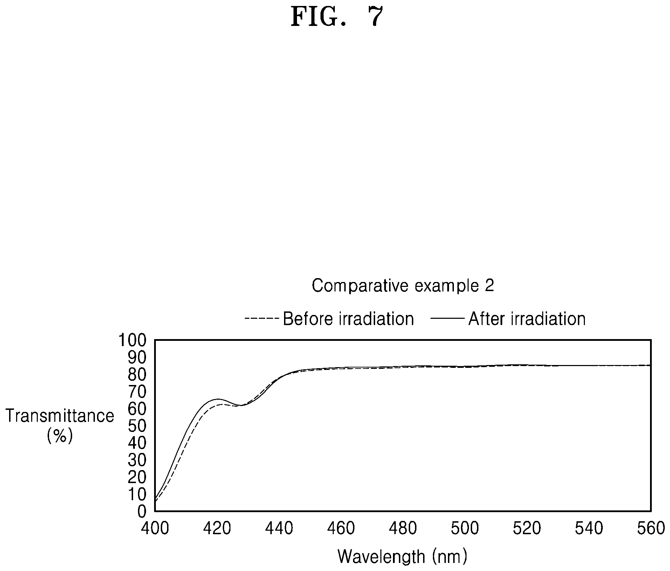

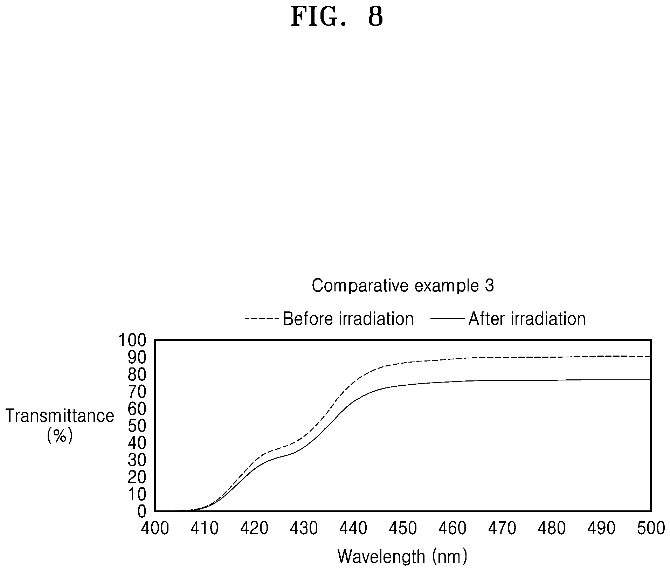

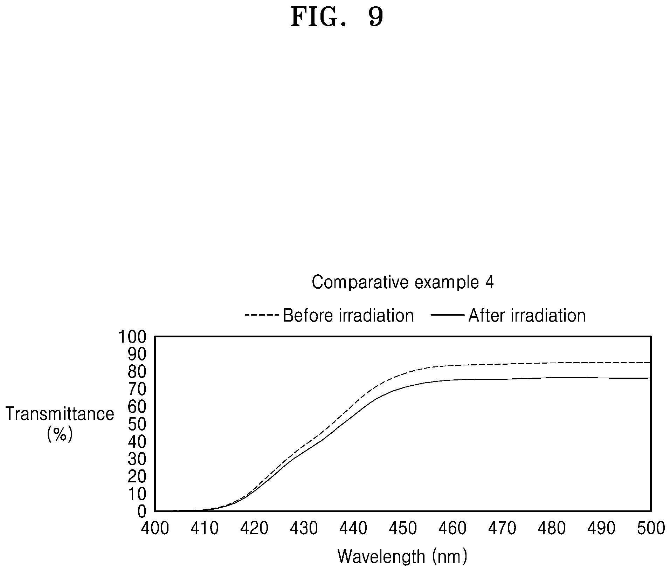

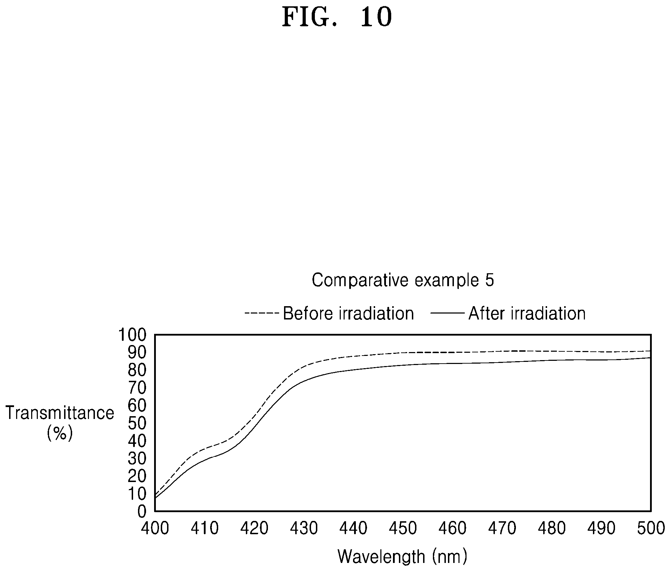

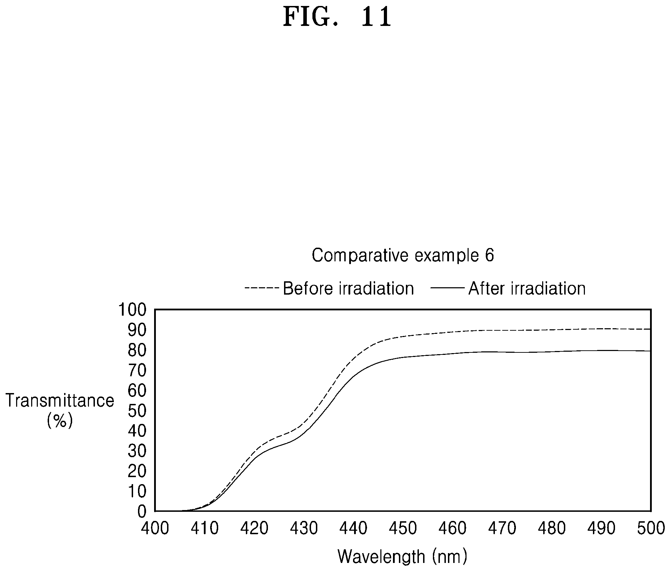

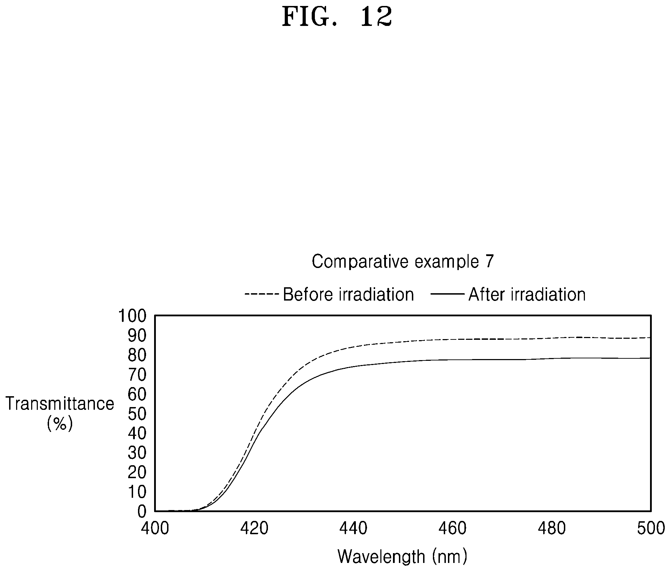

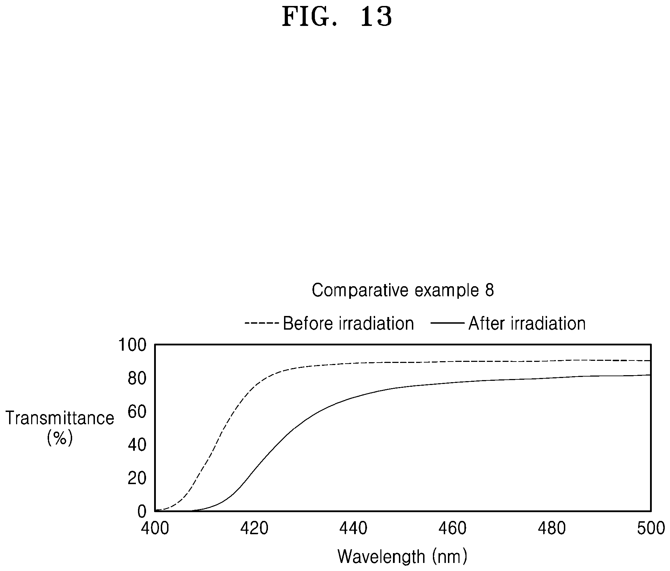

Physical properties of the blue light shielding films manufactured by Examples 1 to 3 and Comparative Examples 1 to 8 were evaluated by the following methods. The results are shown in Table 2 and FIGS. 3 to 13.

### (1) Light transmittance (%), light transmittance change rate, and full width at half maximum (nm)

For each blue light shielding film, a transmittance spectrum in a wavelength range of 400 nm to 500 nm was measured using a spectrophotometer (UV-3600 and manufactured by SHIMADZU). From this, light transmittances (%) before and after irradiation of light having wavelengths of 420 nm, 430 nm, and 460 nm were read, and a light transmittance change rate at a wavelength of 430 nm was calculated according to Expression 1-1 below.

In addition, the presence of an emission peak at a wavelength of 400 nm to 500 nm upon irradiation of monomodal light and the full width at half maximum (nm) of the emission peak were measured using a spectroradiometer (CA-S20W and manufactured by KONICA MINOLTA). The full width at half maximum (nm) refers to an emission intensity value corresponding to 1/2 of the maximum emission peak in the emission spectrum. $\left(T-{T}_{0}\right) / {T}_{0}$

In Expression 1-1,
T₀ is a light transmittance (%) before irradiation of light having a wavelength of 430 nm, and
T is a light transmittance (%) after irradiation of light having a wavelength of 430 nm for 500 hours.

### (2) Water Vapor Transmission Rate of Substrate Film (WVTR, g/m²·day)

Water vapor transmission rate (WVTR) of a substrate film used in each of the blue light shielding films was measured. The water vapor transmission rate was measured in a thickness direction of the film under conditions of 38.5 °C and 100% RH using MOCON equipment.

**[Table 2]**

| Category | Light transmittance before light irradiation (%) | | | Light transmittance after light irradiation (%) | | | Light transmittanc e change rate (@430) | Full width of half maximu m of emission peak (nm) | WVTR of substrate film (g/m²day ) |
|---|---|---|---|---|---|---|---|---|---|
| | @42 0 nm | @43 0 nm | @46 0 nm | @42 0 nm | @43 0 nm | @46 0 nm | | | |
| Example 1 | 29 | 43 | 89 | 23 | 37 | 81 | 0.14 | 17 | 6 |
| Example 2 | 12 | 39 | 84 | 11 | 38 | 83 | 0.03 | 16 | 6 |
| Example 3 | 13 | 39 | 86 | 13 | 38 | 85 | 0.03 | 18 | 6 |
| Comparativ e Example 1 | 7 | 50 | 86 | 5 | 30 | 69 | 0.40 | 19 | 6 |
| Comparativ e Example 2 | 62 | 62 | 84 | 65 | 63 | 84 | 0.02 | 18 | 6 |
| Comparativ e Example 3 | 28 | 43 | 89 | 24 | 36 | 75 | 0.16 | 19 | 6 |
| Comparativ e Example 4 | 12 | 36 | 83 | 11 | 34 | 75 | 0.06 | 17 | 6 |
| Comparativ e Example 5 | 64 | 84 | 89 | 57 | 76 | 83 | 0.1 | 18 | 6 |
| Comparativ e Example 6 | 29 | 43 | 89 | 25 | 38 | 78 | 0.12 | 18 | 15 |
| Comparativ e Example 7 | 38 | 72 | 88 | 25 | 53 | 77 | 0.26 | 19 | 6 |

Referring to Table 2, the blue light shielding films manufactured by Examples 1 to 3 have a water vapor transmission rate (WVTR) of 6 g/m²·day for the substrate film, and include the first resin in the first light-absorbing layer and the second resin in the second light-absorbing layer. The blue light shielding films manufactured by Examples 1 to 3 shielded 75% or more and 54% or more of light, respectively, after irradiation of light having a wavelength of 420 nm and 430 nm, and transmitted 80% or more of light after irradiation of light having a wavelength of 460 nm. The blue light shielding films manufactured by Examples 1 to 4 had a light transmittance change rate of 0.14 or less at a wavelength of 430 nm, and a full width at half maximum of an emission peak was 20 nm or less in irradiation of monomodal light. The blue light shielding film manufactured by Comparative Example 1 is a film that does not include a second light-absorbing layer. In the blue light shielding film manufactured by Comparative Example 1, degradation by light proceeded due to the 7-diethylamino-4-methylcoumarin first dye included in the first light-absorbing layer, and thus light transmittance decreased at overall wavelengths. The blue light shielding film manufactured by Comparative Example 2 is a film including only a second light-absorbing layer. The blue light shielding film manufactured by Comparative Example 2 showed a low shielding rate due to relatively high light transmittance before and after irradiation of light having a wavelength of 430 nm. The blue light shielding film manufactured by Comparative Example 7 is a film including a polyester-based resin having a hydroxy value of 9 mgKOH/g in the first light-absorbing layer. The blue light shielding film manufactured by Comparative Example 7 had a very low light shielding rate of 13% before irradiation of light having a wavelength of 430 nm.

The blue light shielding film manufactured by Comparative Example 4 is a film including both the first resin and the second resin in the first light-absorbing layer. The blue light shielding film manufactured by Comparative Example 4 transmitted 75% of light after irradiation of light having a wavelength of 460 nm, indicating lower shielding rate compared to the blue light shielding films manufactured by Examples 1 to 4. This is considered to be caused by degradation of the first and second dyes used in the blue light shielding film manufactured by Comparative Example 4. The blue light shielding film manufactured by Comparative Example 5 is a film including the second resin in the first light-absorbing layer and the first resin in the second light-absorbing layer. The blue light shielding film manufactured by Comparative Example 5 exhibited high light transmittances of 84% and 76%, respectively, before and after irradiation of light having a wavelength of 430 nm, indicating a low shielding rate. The blue light shielding film manufactured by Comparative Example 8 is a film using an acrylic second resin and the 7-diethylamino-4-methylcoumarin first dye as a first light-absorbing layer-forming composition. The blue light shielding film manufactured by Comparative Example 8 exhibited a high light transmittance of 87% before irradiation of light having a wavelength of 430 nm indicating that blue light was hardly shieled.

In the blue light shielding film manufactured by Comparative Example 6, the substrate film included in the substrate is thin with a thickness of about 50 µm. The blue light shielding film manufactured by Comparative Example 6 had a high WVTR of the substrate film at 15 g/m²·day, and a low light transmittance because 78% of light was transmitted after irradiation of light having a wavelength of 460 nm.

Based thereon, it may be confirmed that the blue light shielding films manufactured by Examples 1 to 4 may shield harmful light at a high level before and after irradiation of having wavelengths of 420 nm and 430 nm, exhibit high transmittance at a wavelength of 460 nm, and exhibit almost no light transmittance change rate before and after irradiation at a wavelength of 430 nm for 500 hours, thereby maintaining long-term reliability.

Although the embodiments of the present disclosure have been described in detail above, the scope of the present disclosure is not limited thereby, and various modifications and improvements by those skilled in the art by using the basic concept of the present disclosure defined in the following claims also fall within the scope of rights of the present disclosure.

## Claims

1. A blue light shielding film comprising:
a substrate; and
a first light-absorbing layer and a second light-absorbing layer, sequentially formed on one surface of the substrate,
wherein the first light-absorbing layer includes a first resin and a first dye, the second light-absorbing layer includes a second resin and a second dye,
the first resin and the second resin have a glass transition temperature T_{g} of 70 °C or higher, an acid value of 12 mgKOH/g or lower, and a hydroxy value of 8 mgKOH/g or lower, and
the blue light shielding film blocks 40 % or more of light having a wavelength of 420 nm or shorter , blocks 50% or more of light having a wavelength of 430 nm, and transmits 80 % or more of light having a wavelength of 460 nm.

2. The blue light shielding film of claim 1, wherein
the substrate is a barrier film.

3. The blue light shielding film of claim 1, wherein
a thickness of the substrate is 60 µm to 250 µm.

4. The blue light shielding film of claim 1, wherein
the first resin and the second resin are each independently a resin selected from a polyester-based resin, an acrylic-based resin, an acrylic urethane-based resin, a polyester acrylate-based resin, a polyurethane acrylate-based resin, an epoxy acrylate-based resin, a urethane-based resin, an epoxy-based resin, a polycarbonate-based resin, a cellulose-based resin, an acetal-based resin, a polyethylene-based resin, a polystyrene-based resin, a polyamide-based resin, a polyimide-based resin, a melamine-based resin, a phenol-based resin, a silicone-based resin, and a combination thereof.

5. The blue light shielding film of claim 1, wherein
the first dye has a main absorption wavelength range of 350 nm to 420 nm.

6. The blue light shielding film of claim 1, wherein
the first dye comprises a dye selected from a coumarin-based dye, a hydroxyl benzotriazole (HB)-based dye, a tris-resorcinol-triazine chromophore (TRTC)-based dye, a hydroxylphenyl-benzotriazole chromophore (HBC)-based dye, an indole-based dye, a pyridine-based dye, or a combination thereof.

7. The blue light shielding film of claim 1, wherein
the second dye has a main absorption wavelength range of 350 nm to 420 nm, a main absorption wavelength range of 410 nm to 440 nm, and a main absorption wavelength range of any combination thereof.

8. The blue light shielding film of claim 1, wherein
the second dye comprises a dye selected from a porphyrin-based dye, a rhodamine (RH)-based dye, a squaraine (SQ)-based dye, a cyanine (CY)-based dye, or any combination thereof.

9. The blue light shielding film of claim 1, wherein
a content of the first dye is 1 mass% to 40 mass% based on a total mass of the first resin.

10. The blue light shielding film of claim 1, wherein
a content of the second dye is 0.001 mass% to 5 mass% based on a total mass of the second resin.

11. The blue light shielding film of claim 1, wherein
the second light-absorbing layer has a maximum emission peak at a wavelength of 400 nm to 500 nm, and a full width at half maximum of the emission peak is 20 nm or less under monomodal light irradiation.

12. The blue light shielding film of claim 1, wherein
each of the first light-absorbing layer and the second light-absorbing layer further comprises at least one selected from a UV-blocking agent, a UV stabilizer, an antioxidant, and inorganic particles.

13. The blue light shielding film of claim 12, wherein
a content of the UV stabilizer is 1 mass% to 10 mass% based on a total mass of the first resin or the second resin.

14. The blue light shielding film of claim 1, wherein
a thickness of each of the first light-absorbing layer and the second light-absorbing layer is 5 µm to 15 µm.

15. The blue light shielding film of claim 1, wherein
the blue light shielding film has a light transmittance change rate at a wavelength of 430 nm satisfying Expression 1 below: $0.01 \leq \left(T-{T}_{0}\right) / {T}_{0} \leq 0.25$ wherein
T₀ is a light transmittance (%) before irradiation of light having a wavelength of 430 nm, and
T is a light transmittance (%) after irradiation of light having a wavelength of 430 nm for 500 hours.

16. A blue light shielding film comprising:
a substrate;
a first light-absorbing layer formed on one surface of the substrate; and
a second light-absorbing layer formed on the opposite surface of the substrate,
wherein the first light-absorbing layer includes a first resin and a first dye, the second light-absorbing layer includes a second resin and a second dye,
the first resin and the second resin have a glass transition temperature T_{g} of 70 °C or higher, an acid value of 12 mgKOH/g or lower, and a hydroxy value of 8 mgKOH/g or lower, and
the blue light shielding film blocks 40 % or more of light having a wavelength of 420 nm or shorter, blocks 50% or more of light having a wavelength of 430 nm, and transmits 80 % or more of light having a wavelength of 460 nm.

17. An electronic device comprising the blue light shielding film of any one of claims 1 to 15.

18. An electronic device comprising the blue light shielding film of claim 16.
